# EUROPEAN PATENT SPECIFICATION

(11) **EP 1 857 725 B1**
(45) Date of publication and mention of the grant of the patent: **10.07.2013**
(21) Application number: 07009917.1
(22) Date of filing: 18.05.2007
(51) Int. Cl.: F16L 59/02, F16L 59/04, F16L 59/14

(54) **Insulation of pipe-in-pipe systems**
Isolierung von Doppelrohrsystemen
Isolation de systèmes de canalisation à double enveloppe

(30) Priority: 18.05.2006 GB 0609831
(43) Date of publication of application: 21.11.2007
(73) Proprietor: Tata Steel UK Limited, London SW1P 4WY (GB)
(72) Inventor: Freemann, Richard Ward, Weldon Corby Northants (GB)
(74) Representative: Blauw, Frans Gerard

(56) References cited:
- DE-A1- 10 256 550
- GB-A- 2 326 686
- US-A- 5 795 102
- US-A- 6 000 438

## Description

### FIELD OF THE INVENTION

The present invention relates to the insulation of pipe-in-pipe systems.

### BACKGROUND ART

Pipe lines of the so-called "pipe-in-pipe" design are routinely used for returning crude oil from off shore locations via undersea pipe lines. Crude oil generally leaves the well at an elevated temperature of up to 130°C, and if this is allowed to cool then the heavier fractions of the oil will solidify. Clearly, if this happens in the pipe then the pipe line can become blocked.

Pipe-in-pipe systems consist of an inner flow pipe through which the oil or other temperature-sensitive material is conveyed. This lies generally concentrically within an outer pipe, and the annular space In between them is filled with an insulation material. This allows the crude oil to be conveyed along the flow pipe with a temperature drop that is insufficient to cause the pipe to become blocked. Such pipes are disclosed e.g. in US 6000438.

Problems exist in the manufacture of such pipe-in-pipe systems. Generally, there is a trend towards deeper wells that are more distant from the shore, as more convenient wells become exhausted or approach the end of their useful life, and the correspondingly greater depth and greater length of the pipelines means that higher insulation properties and reduced diameter are desirable.

A further problem that is faced by pipe-in-pipe systems is that of "longitudinal compliance". The Inner flow pipe will inevitably be at a higher temperature than the outer pipe as a result of the insulation material between them and the elevated temperature of the fluid within the flow pipe. As a result, the thermal expansion of the flow pipe will be greater than that of the outer pipe. It is therefore necessary to transfer the longitudinal load that is created by this differential thermal expansion between the two pipes. Our previous applications in this field have discussed the use of compressed particulate material such as alumino-silicate microspheres which, if compressed in place, will provide significant load transfer between the two pipes. We have also proposed the use of longitudinally compressed elastomeric gaskets.

One recent suggestion is for a particulate insulation material to be delivered in the form of vacuum-packed half-shells. These are positioned in the annular space between the two pipes and are then burst so that the particulate insulation material can flow into contact with both pipes, offering good insulation properties together with some load transfer capabilities.

### SUMMARY OF THE INVENTION

Our testing of vacuum-packed half-shells has however shown that whilst these give good mechanical and thermal properties, they are difficult to install in a production environment. Put simply, if the half-shells are sized so as to provide sufficient particulate material to give the close and intimate contact between the two pipes which is sufficient for the necessary mechanical and thermal properties, their size and generally tight fit means that they are difficult to Insert into the long lengths of pipe (such as 12 metres or greater) that are typically employed in this field.

We therefore propose, In essence, that the half-shells are Installed and, prior to their rupture, a polyurethane foam Is used to backfill the annular space. This allows for easy Insertion of the half-shells since a small clearance can be provided, but does mean that the necessary properties are nevertheless obtained. The polyurethane foam forms a close fitting enclosure around the half-shells so that after they are breached, they work as Intended.

We propose a method of preparing a pipe-in-pipe apparatus according to claim 1.

We prefer that the sealed packages are vacuum-packaged, and also that they are formed into a half-annular shape. However, loose-filled packages and/or other shapes could be used with advantageous effect.

Generally, the sealed packages are opened by the application of heat after the foam has cured. A conductive element can be provided for this purpose, such as a tape applied to the packaging.

### BRIEF DESCRIPTION OF THE DRAWINGS

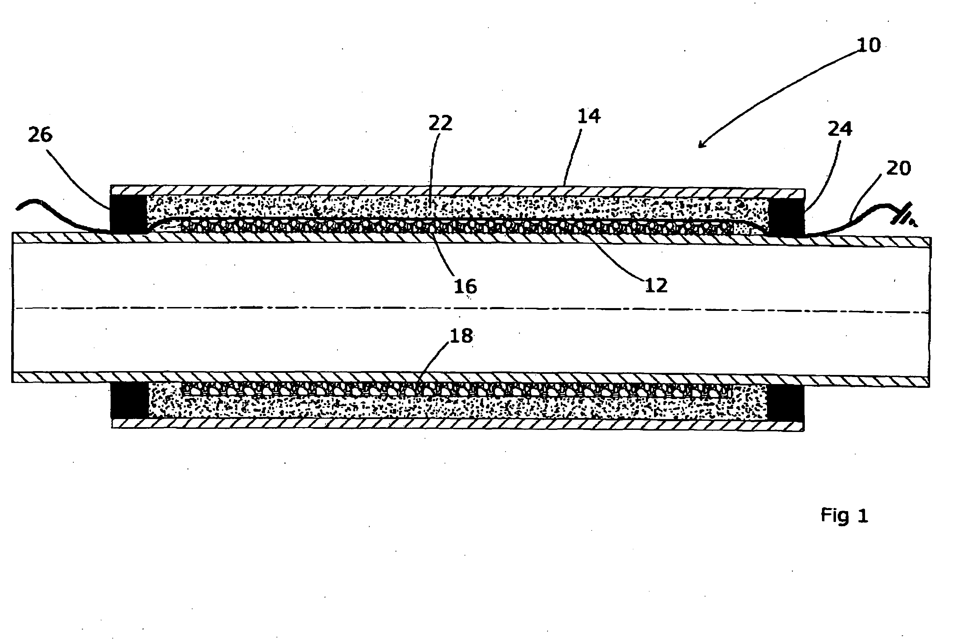

An embodiment of the present invention will now be described by way of example, with reference to the accompanying figure 1 which is a longitudinal section through a pipe-in-pipe system not part of the present Invention.

### DETAILED DESCRIPTION OF THE EMBODIMENTS

Figure 1 shows a pipe-in-pipe conduit 10 at an Intermediate stage In production. An Inner flow pipe 12 of mild steel, 186 mm (8") diameter and 12100mm long is placed concentrically within an outer pipe 14 also of mild steel, but of 279 mm (12") diameter and 11850mm long. A pair of half-annular vacuum-packed shells 16 containing a particulate insulation material 18 such as alumino-silicate microspheres or an aerogel have been placed into the annular space between the two pipes. These each have a conductive tape 20 along an outer surface.

The remaining space around the shells 16 is filled with an injected polyurethane foam 22. To retain the foam in place while it cures, temporary bulkheads 24, 26 are fitted. The foam covers a length that is greater than the shells 16.

Once the foam 22 is cured, the bulkheads are removed and an electrical current is passed through the tape 20. This heats the packaging of the shells 16 and causes them to rupture, releasing the particulate insulation 18. The fact that the foam 22 covers a length of the pipe longer than the shells 16 has several advantages; the insulation material is retained in place and does not escape, and the pipe ends are held concentrically by the foam to assist the subsequent welding of adjacent pipes. The release of the particulate insulation from the vacuum packaging then allows it to conform to the structures around it to offer the necessary mechanical properties.

In this manner, the performance of the polyurethane foam is enhanced allowing application at higher and lower temperatures. The particulate insulation protects the polyurethane from the temperature extremes of the flow line.

The invention also allows for economic benefits In that less particulate Insulation needs to be used, while still attaining a high combined thermal performance from the particulate insulation and the and polyurethane foam material. Confinement of the shells 16 gives high load transfer abilities and packing, allowing optimum performance. The pressure exerted during foaming further compresses the shells.

It will of course be understood that many variations may be made to the above-described embodiment without departing from the scope of the present invention.

## Claims

1. Method of manufacturing a pipe-in-pipe conduit (10) comprising a central flow pipe (12) and
an outer pipe (14), wherein the annular space between the central flow pipe (12)
and the outer pipe (14) comprises a particulate insulation material (18)
comprising the steps of:
- assembling a pair of concentric pipes (12, 14) with a central flow pipe (12) and an outer pipe (14),
- inserting a plurality of sealed packages (16) containing a particulate insulation material (18) into the space between the central flow pipe (12) and an the outer pipe (14),
- filling at least part of the remainder of the space between the central flow pipe (12) and an the outer pipe (14) with a polyurethane foam (22), and **characterized in** opening the sealed packages (16) containing the particulate insulation material (18).

2. Method according to claim 1, wherein the sealed packages containing the particulate insulation material (18) are opened after the polyurethane foam (22) has cured.

3. Method according to claim 1 or 2, wherein the sealed packages containing the particulate insulation material (18) are half-annular vacuum-packed shells (16).

4. Method according to claim 3, wherein the half-annular vacuum-packed shells (16) are placed around the central flow pipe (12).

5. Method according to one or more of claims 1-4, wherein the sealed packages containing the particulate insulation material (18) are opened by applying heat to the sealed packages.

6. Method according to claim 5, wherein the sealed packages (16) comprise a conductive clement (20).

7. Method according to claim 6 wherein the conductive element (20) is a tape (20).

8. Method according to claim 6 or 7, wherein heat is applied by running an electric current through the conductive element (20).

9. Method according to one or more of claims 1-8, wherein the particulate insulation material (18) contains alumino-silicate microspheres.

10. Conduit manufactured according to the method according to one or more of claims 1-9, wherein the polyurethane foam (22) is in contact with both the outer pipe (14) and the central flow pipe (12) and wherein the polyurethane foam (22) and the central flow pipe (12) define an enclosure for the particulate insulation material (18).

## Patentansprüche

1. Verfahren zum Herstellen einer Rohr-in-Rohr-Leitung (10), die ein zentrales Strömungsrohr (12) und ein Außenrohr (14) umfasst, wobei der ringförmige Raum zwischen dem zentralen Strömungsrohr (12) und dem Außenrohr (14) ein teilchenförmiges Isoliermaterial (18) umfasst, das die folgenden Schritte umfasst:
- Montieren eines Paars von konzentrischen Rohren (12, 14) mit einem zentralen Strömungsrohr (12) und einem Außenrohr (14),
- Einführen mehrerer verschlossener Packungen (16), die ein teilchenförmiges Isoliermaterial (18) enthalten, in den Raum zwischen dem zentralen Strömungsrohr (12) und dem Außenrohr (14),
- Füllen zumindest eines Teils des restlichen Raums zwischen dem zentralen Strömungsrohr (12) und dem Außenrohr (14) mit einem Polyurethanschaum (22), und
**gekennzeichnet durch** Öffnen der verschlossenen Packungen (16), die das teilchenförmige Isoliermaterial (18) enthalten.

2. Verfahren nach Anspruch 1, wobei die verschlossenen Packungen, die das teilchenförmige Isoliermaterial (18) enthalten, geöffnet werden, nachdem der Polyurethanschaum (22) gehärtet ist.

3. Verfahren nach Anspruch 1 oder 2, wobei die verschlossenen Packungen, die das teilchenförmige Isoliermaterial (18) enthalten, halbringförmige, vakuumverpackte Schalen (16) sind.

4. Verfahren nach Anspruch 3, wobei die halbringförmigen, vakuumverpackten Schalen (16) um das zentrale Strömungsrohr (12) gelegt werden.

5. Verfahren nach einem der Ansprüche 1-4, wobei die verschlossenen Packungen, die das teilchenförmige Isoliermaterial (18) enthalten, durch Anwendung von Wärme auf die verschlossenen Packungen geöffnet werden.

6. Verfahren nach Anspruch 5, wobei die verschlossenen Packungen (16) ein leitfähiges Element (20) umfassen.

7. Verfahren nach Anspruch 6, wobei das leitfähige Element (20) ein Band (20) ist.

8. Verfahren nach Anspruch 6 oder 7, wobei Wärme durch Durchleiten eines elektrischen Stroms durch das leitfähige Element (20) angewendet wird.

9. Verfahren nach einem oder mehreren der Ansprüche 1-8, wobei das teilchenförmige Isoliermaterial (18) Alumosilikat-Mikrokügelchen enthält.

10. Leitung, die gemäß dem Verfahren nach einem der Ansprüche 1-9 hergestellt ist, wobei der Polyurethanschaum (22) in Kontakt mit dem Außenrohr (14) und dem zentralen Strömungsrohr (12) ist und wobei der Polyurethanschaum (22) und das zentrale Strömungsrohr (12) eine Umfassung für das teilchenförmige Isoliermaterial (18) definieren.

## Revendications

1. Procédé de fabrication d'une conduite à double enveloppe (10) comprenant une conduite d'écoulement centrale (12) et une conduite extérieure (14), sachant que l'espace annulaire entre la conduite d'écoulement centrale (12) et la conduite extérieure (14) comprend un matériau isolant particulier (18), comprenant les étapes :
- d'assemblage d'une paire de conduites concentriques (12, 14) avec une conduite d'écoulement centrale (12) et une conduite extérieure (14),
- d'insertion d'une pluralité d'emballages scellés (16) contenant un matériau isolant particulier (18) dans l'espace entre la conduite d'écoulement centrale (12) et la conduite extérieure (14),
- de remplissage d'au moins une partie du restant de l'espace entre la conduite d'écoulement centrale (12) et la conduite extérieure (14) avec une mousse polyuréthane (22) et
**caractérisé par** l'ouverture des emballages scellés (16) contenant le matériau isolant particulier (18).

2. Procédé selon la revendication 1, dans lequel les emballages scellés contenant le matériau isolant particulier (18) sont ouverts après que la mousse polyuréthane ait durci (22).

3. Procédé selon la revendication 1 ou 2, dans lequel les emballages scellés contenant le matériau isolant particulier (18) sont des enveloppes semi-annulaires emballées sous vide (16).

4. Procédé selon la revendication 3, dans lequel les enveloppes semi-annulaires emballées sous vide (16) sont placées autour de la conduite d'écoulement centrale (12).

5. Procédé selon l'une ou plusieurs des revendications 1 à 4, dans lequel les emballages scellés contenant le matériau isolant particulier (18) sont ouverts en appliquant de la chaleur sur les emballages scellés.

6. Procédé selon la revendication 5, dans lequel les emballages scellés (16) comprennent un élément conducteur (20).

7. Procédé selon la revendication 6, dans lequel l'élément conducteur (20) est une bande (20).

8. Procédé selon la revendication 6 ou 7, dans lequel de la chaleur est appliquée en faisant passer un courant électrique à travers l'élément conducteur (20).

9. Procédé selon l'une ou plusieurs des revendications 1 à 8, dans lequel le matériau isolant particulier (18) contient des microsphères d'aluminosilicate.

10. Conduite fabriquée selon le procédé selon l'une ou plusieurs des revendications 1 à 9, dans laquelle la mousse polyuréthane (22) est en contact à la fois avec la conduite extérieure (14) et la conduite d'écoulement centrale (12) et dans laquelle la mousse polyuréthane (22) et la conduite d'écoulement centrale (12) définissent une enceinte pour le matériau isolant particulier (18).
